# EUROPÄISCHE PATENTSCHRIFT

(11) **EP 0 641 930 B1**
(45) Veröffentlichungstag und Bekanntmachung des Hinweises auf die Patenterteilung: **08.05.1996**
(21) Anmeldenummer: 94112703.7
(22) Anmeldetag: 13.08.1994
(51) Int. Cl.: F02M 25/08

(54) **Elektropneumatisches Steuerventil**
Electropneumatic control valve
Valve à commande électro-pneumatique

(30) Priorität: 01.09.1993 DE 4329396
(43) Veröffentlichungstag der Anmeldung: 08.03.1995
(73) Patentinhaber: PIERBURG GMBH, D-41460 Neuss (DE)
(72) Erfinder: Denne, Albert, Dr., D-40667 Meerbusch (DE); Buse, Werner, D-41564 Kaarst (DE); Parthe, Gerhard, D-41352 Korschenbroich (DE)

(56) Entgegenhaltungen:
- DE-A- 3 519 292
- DE-A- 3 844 057
- DE-A- 3 907 408
- DE-C- 3 802 664
- DE-C- 4 003 036

## Beschreibung

Die Erfindung betrifft ein elektropneumatisches Steuerventil nach dem Oberbegriff des Patentanspruchs 1.

Derartige Steuerventile (DE-A1-39 07 408) werden für die Regenerierung eines Absorptionselements für flüchtigen Brennstoff durch Frischluft benötigt, die durch das Absorptionselement während des normalen Betriebs einer Brennkraftmaschine gesaugt wird, wobei das Steuerventil aus einem Elektromagnetventil besteht, bei dem die Ventilöffnung mit Ventilsitz von einer Membrane getragen wird, die in Abhängigkeit von der Höhe des Ansaugdrucks der Brennkraftmaschine gegenüber dem Atmosphärendruck gesteuert wird.

Bei diesem gattungsgemäßen Steuerventil besteht der Nachteil, daß eine optimale Regenerierung des Absorptionselements bei optimalem Betriebsverhalten der Brennkraftmaschine nicht zu erreichen ist, weil eine erforderliche, feinfühlige Durchlaßsteuerung aufgrund des frei an der Membrane befestigten Ventilsitzes, der zu Schiefstellungen neigt, nicht durchfürbar ist.

Hiervon ausgehend liegt der Erfindung die Aufgabe zugrunde, Maßnahmen aufzufinden, mit denen eine verbesserte Steuerung der Regenerierungsluft eines Absorptionselements erreichbar ist.

Diese Aufgabe ist durch die im Patentanspruch 1 genannten Merkmale gelöst. Vorteilhafte Weiterbildungen sind in den Unteransprüchen angegeben.

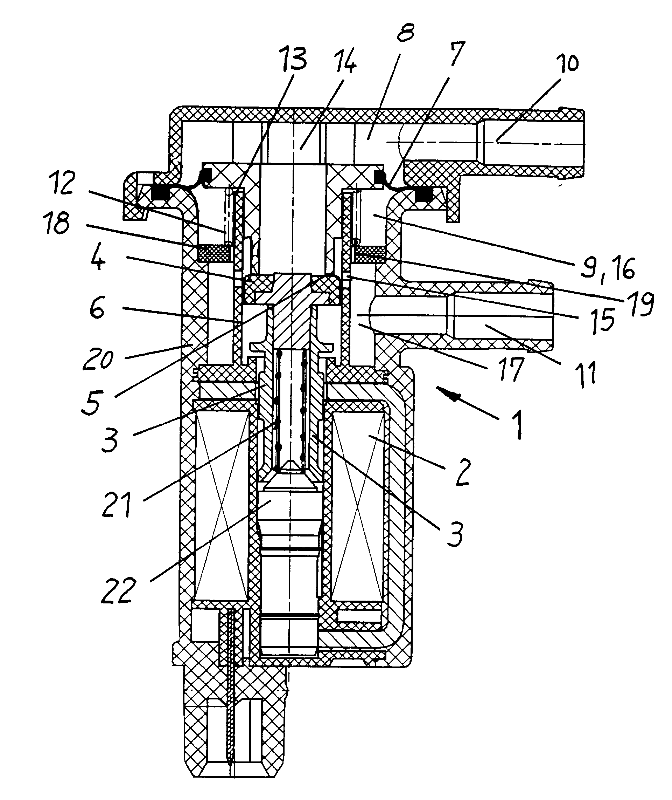

Das erfindungsgemäße Steuerventil ist in der Zeichnung dargestellt und wird nachfolgend beschrieben.

Diese zeigt das Steuerventil 1, gebildet aus einem Elektromagnetventil 2, dessen Anker 3 als Ventilschließkörper 4 ausgebildet und in Abhängigkeit von Steuersignalen eines elektronischen Steuergerätes getaktet angesteuert wird, so daß der Ventilschließkörper 4 Öffnungs- und Schließphasen des Ventils bewirkt.

Ein hierfür vorgesehener Ventilsitz 5 ist in einer Führungshülse 6 verschieblich angeordnet und mit einer Membrane 7 verbunden, die eine stromauf und eine stromab des Ventils befindliche Kammer 8, 9 abtrennt, wobei die stromaufliegende Kammer 8 einen Anschluß 10 für das Absorptionselement und die stromabliegende Kammer 9 einen Anschluß 11 für das Ansaugrohr der Brennkraftmaschine aufweist. In der stromabliegenden Kammer 9 ist eine Feder 12 angeordnet, die die Membrane 7 in Richtung der anderen Kammer 8 belastet. Die Führungshülse 6 bildet für die Membrane 7 bzw. den Ventilsitz 5 einen Anschlag 13 für eine Verstellung in die stromabliegende Kammer 9, Rippen 14 für die Verstellung in die andere Kammer 8.

Die Führungshülse 6 weist stromab des Ventilsitzes 5 Kalibrieröffnungen 15 auf, die den Durchsatz drosseln, so daß die Membrane 7 mit von der Ventilfunktion unbeeinflußtem, beruhigtem Saugrohrdruck beaufschlagt ist. Eine vorteilhafte Weiterbildung der Erfindung sieht hierfür vor, daß zwischen einem die Membrane 7 aufweisenden Kammerteil 16 und einem den Anschluß 11 und die Kalibrieröffnungen 15 aufweisenden Kammerteil 17 eine Trennwand 18 besteht, wobei die Kammerteile 16, 17 durch eine Kalibrieröffnung 19 verbunden sind, die in der Trennwand 18 oder der Gehäusewandung 20 angeordnet ist. In der dargestellten Ausführung besteht die Kalibrieröffnung aus einem Ringspalt zwischen Führungshülse 6 und Trennwand 18.

### Funktion

Das Steuerventil ist mit dem Saugrohr der Brennkraftmaschine und dem Absorptionselement verbunden und an das Steuergerät angeschlossen. Bei hohen Luftdurchsätzen herrscht im Saugrohr nur ein geringfügig unter dem Atmosphärendruck liegender Ansaugdruck, so daß die mit diesem Druck beaufschlagte Membrane 7 unter der Kraftwirkung der Feder 12 in die stromaufliegende Kammer 8 gedrückt wird und auf den Rippen 14 anliegt.

Bei unbestromtem Elektroventil wird der Ventilschließkörper 4 unter der Kraft einer Feder 21 gegen den Ventilsitz 5 gedrückt. In dieser Stellung ist der Luftspalt zwischen Anker 3 und Magnetkern 22 groß. Bei bestromtem Elektromagnetventil öffnet das Ventil mit größter Amplitude, daß heißt mit größtmöglichem Ventilhub, so daß in Verbindung mit einer langen Öffnungsphase selbst bei dem niedrigen Ansaugdruck eine ausreichend große Regenerierluftmenge über das Ventil fließen kann.

Bei Leerlauf- oer Teillastbetrieb der Brennkraftmaschine herrscht gegenüber der Atmosphäre ein sehr niedriger Ansaugdruck, so daß die mit diesem beaufschlagte Membrane 7 in die stromabliegende Kammer 9 und ggf. gegen die Führungshülse 6 gezogen wird. Bei geschlossenem Magnetventil wird der Anker 3 mitgezogen, so daß sich ein geringster Luftspalt zwischen Anker 3 und Magnetkern 22 ergibt. Bei bestromtem Elektromagnetventil öffnet das Ventil mit kleinster Amplitude, daß heißt kleinstem Ventilhub, so daß in Verbindung mit einer kurzen Öffnungsphase eine feinfühlige Luftdurchsatzsteuerung erreicht ist.

Als besonderer Vorteil hat sich herausgestellt, daß der Anker 3 in dieser Betriebsphase im engsten Luftspalt des Elektromagneten arbeitet, daß heißt mit überproportionalem Kraftzuwachs gegenüber dem Zustand im größten Luftspalt, so daß die Schließkraft der Feder 21 entsprechend groß ausgelegt sein kann.

Das erfindungsgemäße Steuerventil ermöglicht eine feinfühlige Steuerung der Regenerierluftmenge bei optimalem Betriebsverhalten der Brennkraftmaschine.

## Patentansprüche

1. Elektromagnetisches Steuerventil für die Regenerierung eines Absorptionselementes für flüchtigen Brennstoff durch Frischluft, bestehend aus einem elektromagnetischen und einem pneumatischen Stellglied (3 und 7), die auf eine einen Luftkanal (10, 11) steuernde Ventileinrichtung einwirken, bestehend aus einem Ventilsitz (5) und einem Ventilschließkörper (4), die unabhängig voneinander durch die Stellglieder (3 und 7) verstellt werden, dadurch gekennzeichnet, daß Ventilsitz (5) und Ventilschließkörper (4) gemeinsam in einer Führungshülse (6) geführt sind.

2. Steuerventil nach Anspruch 1, dadurch gekennzeichnet, daß die Führungshülse (6) Kalibrieröffnungen (15) aufweist, die den Innenraum der Führungshülse (6) mit einer Membrankammer (9) verbinden, die über einen Anschluß (11) mit einer Unterdruckquelle verbindbar ist.

3. Steuerventil nach Anspruch 2, dadurch gekennzeichnet, daß zwischen einem den Anschluß (11) und die Kalibrieröffnungen (15) aufweisenden Kammerteil (17) und einem die Membrane (7) aufweisenden Kammerteil (16) eine Trennwand (18) besteht.

4. Steuerventil nach Anspruch 3, dadurch gekennzeichnet, daß die Kammerteile (16, 17) durch eine Kalibrieröffnung (19) verbunden sind.

5. Steuerventil nach Anspruch 4, dadurch gekennzeichnet, daß die Kalibrieröffnung (19) in der Trennwand (18) oder der Gehäusewandung (20) angeordnet ist.

## Claims

1. Solenoid control valve for the regeneration of an absorption element for volatile fuel by means of fresh air, consisting of one electromagnetic and one pneumatic actuator (3 and 7) which act on a valve device which controls an air passage (10, 11), the said valve device consisting of a valve seat (5) and a valve-closing element (4) which are displaced independently of one another by means of the actuators (3 and 7), characterized in that the valve seat (5) and valve closing element (4) are guided together in a guide sleeve (6).

2. Control valve according to Claim 1, characterized in that the guide sleeve (6) has calibration openings (15) which connect the interior of the guide sleeve (6) to a diaphragm chamber (9) which can be connected to a partial vacuum source via a connection (11).

3. Control valve according to Claim 2, characterized in that there is a separating wall (18) between a chamber part (17) which has the connection (11) and the calibration openings (15) and a chamber part (16) which has the diaphragm (7).

4. Control valve according to Claim 3, characterized in that the chamber parts (16, 17) are connected by means of a calibration opening (19).

5. Control valve according to Claim 4, characterized in that the calibration opening (19) is arranged in the separating wall (18) or the housing wall (20).

## Revendications

1. Vanne de commande électromagnétique pour la régénération d'un élément d'absorption pour un combustible volatil par de l'air frais, se composant d'un organe de commande électromagnétique et d'un organe de commande pneumatique (3 et 7), qui agissent sur un dispositif de soupape qui commande un canal d'air (10, 11), se composant d'un siège de soupape (5) et d'un corps de fermeture de soupape (4), qui sont déplacés par les organes de commande (3 et 7) indépendamment l'un de l'autre, caractérisée en ce que le siège de soupape (5) et le corps de fermeture de soupape (4) sont guidés ensemble dans un fourreau de guidage (6).

2. Vanne de commande suivant la revendication 1, caractérisée en ce que le fourreau de guidage (6) présente des ouvertures de calibrage (15), qui relient le volume intérieur du fourreau de guidage (6) à une chambre de membrane (9), qui peut être reliée à une source de dépression par l'intermédiaire d'un raccord (11).

3. Vanne de commande suivant la revendication 2, caractérisée en ce qu'il existe une paroi de séparation (18) entre une partie de chambre (17) présentant le raccord (11) et les ouvertures de calibrage (15) et une partie de chambre (16) présentant la membrane (7).

4. Vanne de commande suivant la revendication 3, caractérisée en ce que les parties de chambre (16, 17) sont reliées par une ouverture de calibrage (19).

5. Vanne de commande suivant la revendication 4, caractérisée en ce que l'ouverture de calibrage (19) est disposée dans la paroi de séparation (18) ou dans la paroi du corps (20).
